# EUROPÄISCHE PATENTSCHRIFT

(11) **EP 3 439 253 B1**
(45) Veröffentlichungstag und Bekanntmachung des Hinweises auf die Patenterteilung: **09.09.2020**
(21) Anmeldenummer: 18186516.3
(22) Anmeldetag: 31.07.2018
(51) Int. Cl.: H04L 12/863, H04L 12/861

(54) **VERFAHREN ZUR MEDIENZUGRIFFSSTEUERUNG UND TAKTISCHES LUFTVERTEIDIGUNGSSYSTEM**
METHOD FOR MEDIA ACCESS CONTROL AND TACTICAL AIR-DEFENCE SYSTEM
PROCÉDÉ DE COMMANDE D'ACCÈS MULTIMÉDIA ET SYSTÈME ANTIAÉRIEN TACTIQUE

(30) Priorität: 01.08.2017 DE 102017007290
(43) Veröffentlichungstag der Anmeldung: 06.02.2019
(73) Patentinhaber: MBDA Deutschland GmbH, 86529 Schrobenhausen (DE)
(72) Erfinder: Grabmeier, Michael, 83022 Rosenheim (DE); Hiener, Sven, 97999 Igersheim (DE); Brunner, Jörg, 85051 Ingolstadt (DE)
(74) Vertreter: Isarpatent

(56) Entgegenhaltungen:
- US-A1- 2003 053 469
- MIKKEL THORUP: "Equivalence between priority queues and sorting", JOURNAL OF THE ASSOCIATION FOR COMPUTING MACHINERY, ACM, NEW YORK, NY, US, Bd. 54, Nr. 6, 1. Dezember 2007 (2007-12-01), Seiten 28-es, XP058158327, ISSN: 0004-5411, DOI: 10.1145/1314690.1314692
- Northrop Grumman: "Understanding Voice and Data Link Networking Understanding Voice and Data Link Networking. Northrop Grumman's Guide to Secure Tactical Data Links", , 1 December 2014 (2014-12-01), XP055559331, Retrieved from the Internet: URL:https://www.northropgrumman.com/Capabi lities/DataLinkProcessingAndManagement/Doc uments/Understanding_Voice+Data_Link_Netwo rking.pdf [retrieved on 2019-02-20]
- Anonymous: "FM 3-01.11 (FM 44-100-2) AIR DEFENSE ARTILLERY REFERENCE HANDBOOK", , 31 October 2000 (2000-10-31), XP055628738, Washington Retrieved from the Internet: URL:https://www.bits.de/NRANEU/others/amd- us-archive/FM3-01.11(00).pdf [retrieved on 2019-10-04]
- J Asenstorfer ET AL: "Tactical data link systems and the Australian Defence Force (ADF) : technology developments and interoperability issues", , 1 February 2006 (2006-02-01), XP055628740, Retrieved from the Internet: URL:http://citeseerx.ist.psu.edu/viewdoc/d ownload?doi=10.1.1.174.2663&rep=rep1&type= pdf [retrieved on 2019-10-04]

## Beschreibung

### TECHNISCHES GEBIET DER ERFINDUNG

Die Erfindung betrifft ein Medienzugriffssteuergerät ("media access controller", MAC), insbesondere für den Einsatz in Netzwerkschnittstellen von Netzwerkknoten eines taktischen Luftverteidigungssystems, sowie Verfahren zur prioritätsbasierten Medienzugriffssteuerung.

### TECHNISCHER HINTERGRUND

Taktische Luftverteidigungssysteme, TLVS, nutzen primär funkgebundene Kommunikationsmittel, welche die taktische Datenübertragung im Nahbereich abdecken. Dabei sind die erhöhte Störanfälligkeit, die Kapazitätsbegrenzungen bei verfügbaren Frequenzspektren und die Nutzdatenratenreduzierung aufgrund von für die drahtlose Datenübertragung notwendigen Steuerinformationen zu berücksichtigen. Es ist wünschenswert, Netzwerke von TLVS als Ad-hoc-Netze auszubilden, so dass eine dedizierte Basisstation entfallen kann. Allerdings ist unter diesen Bedingungen sicherzustellen, dass zeitkritische Daten mit äußerst geringer Ausfallwahrscheinlichkeit und zeitnah an die jeweiligen Netzwerkteilnehmer kommuniziert werden können.

Die Druckschrift US 6,938,097 B1 offenbart eine Netzwerkkarte mit einem Speichermanagement für die Weiterleitung von Datenpaketen, bei dem paketbasierter Netzwerkverkehr nach den Datenpaketen anheftenden Prioritätskennungen in FIFO-Warteschlangen unterschiedlicher Priorität eingeteilt und verschickt wird.

Die Druckschrift US 2003/053469 A1 offenbart Kommunikationsnetzwerkstationen mit internen Warteschlangen zum Sammeln und zeitversetzten Übertragen von Datennachrichten über einen gemeinsam genutzten Kommunikationskanal.

Anonymous: "FM 3-01.11 (FM 44-100-2) AIR DEFENSE ARTILLERY REFERENCE HANDBOOK",, 31. Oktober 2000 (2000-10-31),Washington. Gefunden im Internet:URL:https://www.bits.de/NRANEU/others/amd-us-archive/FM3-01.11(00).pdf beschreibt typische militärische Luftverteidigungssysteme.

### ZUSAMMENFASSUNG DER ERFINDUNG

Eine der Aufgaben der Erfindung besteht darin, möglichst basisstationslose Lösungen für die konkurrenzbasierte Übertragung von Daten mehrerer Netzwerkteilnehmer über ein ressourcenbeschränktes Übertragungsmedium zu finden, bei denen die Netzwerkteilnehmer direkt untereinander möglichst störungsarm und ressourceneffizient kommunizieren können.

Diese und andere Aufgaben werden durch ein ein taktisches Luftverteidigungssystem mit den Merkmalen des Anspruchs 1, sowie ein Verfahren zur Medienzugriffssteuerung mit den Merkmalen des Anspruchs 8 gelöst.

Eine wesentliche Idee der Erfindung besteht darin, leistungsfähige Dienstgüteklassen für paketbasierte Kommunikation über ein ressourcenbeschränktes Übertragungsmedium mittels einer deterministischen Zeitablaufsteuerung zu implementieren. Diese deterministische Zeitablaufsteuerung kann beim Kanalzugriff auf das ressourcenbeschränkte Übertragungsmedium mit einer stochastischen Kanalzugriffsfunktion kooperieren, um eine zentrale Basisstation zu vermeiden und somit die verfügbare Bandbreite des Übertragungskanals besser auszunutzen und den Aufbau von Ad-hoc-Netzwerken zu erleichtern.

Ein besonderer Vorteil in den erfindungsgemäßen Lösungen besteht darin, dass die Kommunikation zwischen beteiligten Netzwerkknoten dezentralisiert werden kann. Dadurch kann eine Gefechtsstandfunktionalität in taktischen Luftverteidigungssystemen von mehreren Netzwerkknoten dynamisch ausgehandelt werden und somit der Verlust der aktuellen Gefechtsstandsfunktion kompensiert werden.

Insbesondere wird das Risiko netzwerkinterner Kollisionen verringert und die Kanalzugriffsplanung kann verbessert werden. Durch die Verwendung von Frameprioritätsinformationen in grob abgestufter Form können Overheads bei Versandinformationen abgebaut und ein höherer Anteil der Kanalbandbreite für Nutzdaten verfügbar gemacht werden. Das gesamte Netzwerk wird durch die prioritätsbasierte Medienzugriffsfunktionssteuerung erheblich flexibler als ein statisches Basisstationsnetz.

Eine zentrale Basisstation als potentiell primäres Ziel für Angreifer und als singuläre Schwachstelle ist mit den erfindungsgemäßen Lösungen nicht erforderlich. Dadurch werden vorteilhafterweise außerdem zusätzliche Kanalkapazitäten für Nutzerdaten verfügbar. Es ist weiterhin möglich, dass eine direkte Kommunikation zwischen je zwei beliebigen Netzwerkteilnehmern initiiert wird, d.h. die Sterntopologie des Netzwerkes existiert nach wie vor, aber nur auf funktionaler Ebene, nicht mehr auf der Übertragungsebene. Bei Störungen und/oder Ausfällen einzelner Elemente des Kommunikationssystems können die unterbrochenen Netzwerkverbindungen selbstständig rekonfiguriert werden, um eine kontinuierliche Kommunikation ohne wesentliche Einschränkungen sicherzustellen. Schließlich können lokal bei jedem Netzwerkteilnehmer die benötigten Betriebsparameter im Fernzugriff initialisiert und automatisiert an den Bedarf und an die verfügbaren Resourcen angepasst werden.

Vorteilhafte Ausgestaltungen und Weiterbildungen ergeben sich aus den weiteren Unteransprüchen sowie aus der Beschreibung unter Bezugnahme auf die Figuren. Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 ein schematisches Blockschaubild der Netzwerkumgebung in einem taktischen Luftverteidigungssystem gemäß einer Ausführungsform der Erfindung;
Fig. 2 eine beispielhafte Illustration eines Netzwerkknotens gemäß einer weiteren Ausführungsform der Erfindung, welcher in einer Netzwerkumgebung eines taktischens Luftverteidigungssystems eingesetzt werden kann;
Fig. 3 ein schematisches Blockschaubild einer Netzwerkschnittstelle eines Netzwerkknotens gemäß einer weiteren Ausführungsform der Erfindung;
Fig. 4 ein schematisches Blockschaubild eines Medienzugriffssteuergerätes gemäß einer weiteren Ausführungsform der Erfindung; und
Fig. 5 ein Flussdiagramm eines Verfahrens zur prioritätsbasierten Medienzugriffssteuerung gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

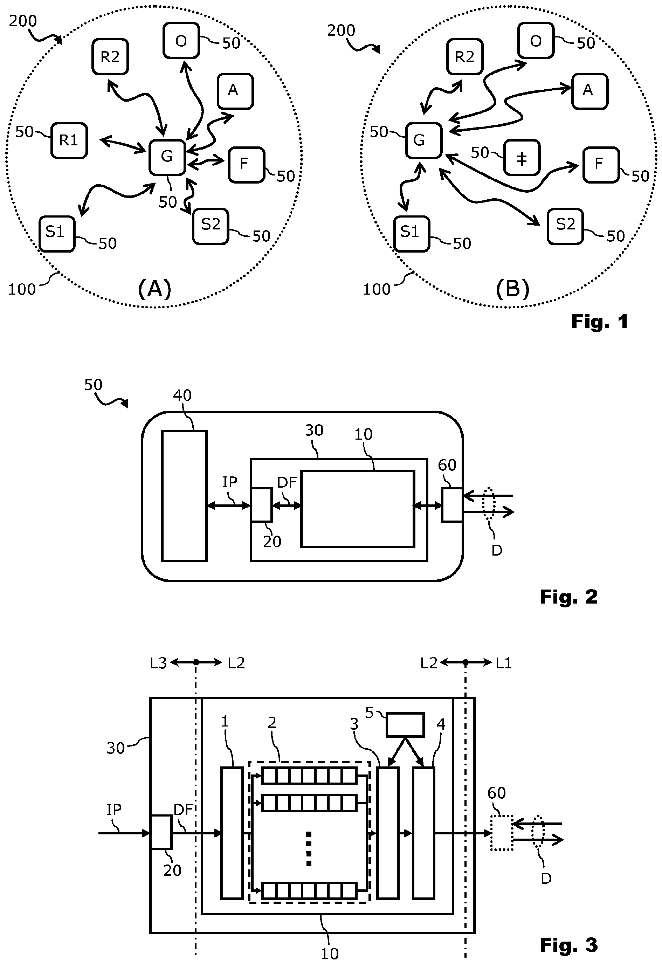

Fig. 1 zeigt eine beispielhafte Illustration einer Netzwerkumgebung 100 in einem taktischen Luftverteidigungssystem 200. Die in Fig. 1 dargestellten Komponenten der Netzwerkumgebung 100 sind nur beispielhafter Natur und weitere Komponenten können im Zusammenhang mit der Netzwerkumgebung 100 implementiert werden. Beispielsweise kann es möglich sein, dass mehr oder weniger als die acht in Fig. 1 dargestellten Netzwerkknoten 50 in der Netzwerkumgebung 100 vorhanden sind. Weiterhin kann das taktische Luftverteidigungssystem 200 als mobiles Ad-hoc-Netzwerk (MANET) ausgebildet werden, so dass sich die Anzahl und Art der Netzwerkknoten 50 im Laufe der Zeit dynamisch verändern kann. Außerdem sollte klar sein, dass die gezeigten Netzwerkverbindungen zwischen einzelnen Netzwerkknoten 50 in Fig. 1 nur beispielhaft dargestellt sind, und dass zwischen Netzwerkknoten 50, zwischen denen in Fig. 1 eine Netzwerkverbindung dargestellt ist, nicht unbedingt oder nicht dauerhaft eine Netzwerkverbindung bestehen muss, und dass zwischen Netzwerkknoten 50, zwischen denen in Fig. 1 keine Netzwerkverbindung dargestellt ist, temporär oder dauerhaft eine Netzwerkverbindung etabliert werden kann.

Die Netzwerkknoten 50 sind jeweils mit netzwerkfähigen Komponenten ausgestattet, so dass es jedem Netzwerkknoten 50 ermöglicht wird, selbsttätig mit anderen Netzwerkknoten 50 Kontakt über ein gemeinsam genutztes Kommunikationsmedium aufzunehmen und über geeignete Kommunikationsprotokolle eine Netzwerkverbindung aufzubauen. Beispielsweise kann das Kommunikationsmedium der freie Raum bzw. die Atmosphäre sein, über die eine drahtlose Netzwerkverbindung aufgebaut werden kann, wie beispielsweise WLAN gemäß IEEE 802.11nNFC oder andere kabellose Übertragungsverfahren im Radiofrequenzbereich und IrDA oder optischer Richtfunk im infraroten bzw. optischen Frequenzbereich. Die dabei etablierten Netzwerkverbindungen können unidirektional oder bidirektional sein. Weiterhin kann die durch die Netzwerkverbindungen entstehende Netzwerkumgebung vermascht sein, beispielsweise durch die Ausbildung redundanter Funkstrecken zur Erhöhung der Netzkapazität, der Netzsicherheit und/oder der Resilienz gegenüber externen Störungen.

Die Netzwerkknoten 50 können unterschiedliche Teilnehmer eines Kommunikationsnetzes zur taktischen Luftverteidigung sein, wie beispielsweise Radarstationen R1, R2 zur Zielverfolgung oder Zielüberwachung, mobile, quasistationäre oder stationäre Gefechtsstände G, Startgeräte S1, S2, Sensoren O wie etwa optronische Sensoren, Flugzeuge A oder Flugkörper F wie etwa Drohnen, Raketen oder dergleichen. Die Netzwerkknoten 50 können untereinander verschiedene Arten von Daten austauschen, beispielsweise taktische Daten, Voiceover-IP-Datenverkehr, Videodaten, Statusberichte, Kommandos, GPS-Daten und dergleichen. Die Datenkommunikation kann bevorzugt paketbasiert erfolgen, beispielsweise in einem Zeitmultiplexübertragungsverfahren (TDMA). Derartige Kommunikationsnetze können beispielsweise von der verbesserten Resilienz gegenüber Störungen und den erhöhten Datenraten der Netzwerkumgebung 100 profitieren.

In Fig. 1 sind zwei Szenarien (A) und (B) dargestellt, in denen jeweils eine Sterntopologie vorherrscht. Da die Sterntopologie aber nicht statisch ist, d.h. keine dauerhaft dedizierte Basisstation vorhanden sein muss, kann zwischen den Sterntopologien der Szenarien (A) und (B) dynamisch gewechselt werden. Eine derartige Netzwerkskonfiguration kann auch als funktionale Sterntopologie bezeichnet werden. Beispielsweise kann das Szenario (A) als "normale" Netzwerkkonfiguration angesehen werden, bei der ein Netzwerkknoten G üblicherweise die Funktion des Gefechtsstandes ausführt und temporär die Funktionen einer Basisstation übernimmt. Wenn nun die Kommunikation zum Netzwerkknoten G gestört ist, ausfällt oder anderweitig unverlässlich geworden ist - angedeutet durch das Doppelkreuz im Knoten G des Szenarios (B) - kann die Sterntopologie dynamisch angepasst werden und gemäß Szenario (B) implementiert werden. Dabei kann einer der anderen Netzwerkknoten 50, beispielsweise die Radarstation R1, die Gefechtsstandfunktion übernehmen. Die übrigen Netzwerkknoten 50 können dynamisch rekonfiguriert werden und nunmehr in Sterntopologie mit der Radarstation R1 als funktionales Sternzentrum kommunizieren. Es sollte dabei klar sein, dass jeder andere der Netzwerkknoten 50 außer der Radarstation R1 ebenso die Gefechtsstandfunktion übernehmen und als zentraler funktionaler Knoten dynamisch ausgewählt werden kann.

Fig. 2 zeigt eine beispielhafte Illustration eines Netzwerkknotens 50. Der Netzwerkknoten 50 kann beispielsweise Teil einer Netzwerkumgebung sein, beispielsweise der Netzwerkumgebung 100 in einem taktischen Luftverteidigungssystem 200, wie in Fig. 1 beispielhaft dargestellt. Es sollte klar sein, dass der Netzwerkknoten 50 auch in anderen Netzwerkumgebungen eingesetzt werden kann und dass Schnittstellen des Netzwerkknotens 50 an die jeweiligen Anforderungen dieser Netzwerkumgebungen angepasst werden können. Beispielsweise können in dem Netzwerkknoten 50 entsprechende Kommunikationsprotokolle implementiert werden, um es dem Netzwerkknoten 50 zu ermöglichen, in den jeweiligen Netzwerkumgebungen mit anderen Netzwerkknoten 50 zu kommunizieren bzw. Daten auszutauschen.

Der beispielhaft dargestellte Netzwerkknoten 50 umfasst eine Kommunikationssteuerung 40, welche die von dem Netzwerkknoten 50 zu übertragenden Daten in paketbasierter Form aufbereitet und empfangene Datenpakete zur Auswertung der darin enthaltenen Informationen für den Netzwerkknoten 50 verarbeitet. Die Datenpakete IP werden mit einer Netzwerkschnittstelle 30 ausgetauscht, die eine Paketbearbeitungseinrichtung 20 aufweist, die als Schnittstelle zwischen der Vermittlungsschicht (Layer 3) auf Seiten der Kommunikationssteuerung 40 einerseits und der Sicherungsschicht (Layer 2) auf Seiten der Netzwerkschnittstelle 30 andererseits fungiert. Dabei werden die zu sendenden Datenpakete IP in Datenframes DF umgewandelt bzw. empfangene Datenframes DF als Datenpakete IP an die Kommunikationssteuerung 40 ausgegeben, d.h. die Paketbearbeitungseinrichtung 20 ist dazu ausgelegt, Datagramme auf Layer-3-Ebene in Datagramme auf Layer-2-Ebene und umgekehrt umzusetzen. Die Datenframes DF auf der Sicherungsschichtebene, beispielsweise MAC-Frames, werden von der Paketbearbeitungseinrichtung 20 an ein Medienzugriffssteuergerät 10 ("media access controller", MAC) abgegeben, welches die Datenframes DF prioritätsbasiert bearbeitet und zu sendende Daten an eine physikalische Datenübertragungseinrichtung 60 des Netzwerkknotens 50 übergibt, so dass die Daten über ein gemeinsam genutztes Medium, beispielsweise einen Funkkanal D, übertragen werden können. Das gemeinsam genutzte Medium steht dabei in einem Zugriffswettbewerb, so dass die Netzwerkschnittstelle 30 Maßnahmen zur Kollisionsüberwachung implementieren kann und entsprechende Kollisionsüberwachungsergebnisse an das Medienzugriffssteuergerät 10 zurückgibt, beispielsweise in Form von die vollständige oder unvollständige Übertragung von Daten über den Funkkanal D bestätigende Signale (Quittierungssignale, sog. ACK-Signale).

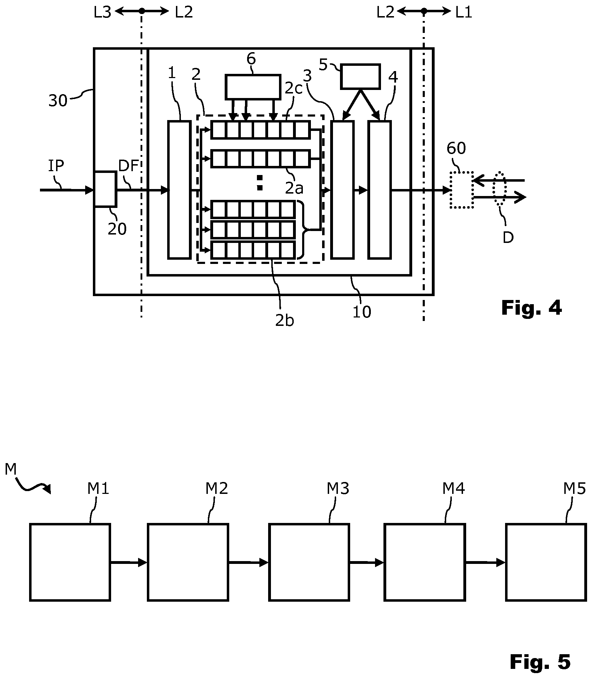

Die Fig. 3 und 4 stellen beispielhafte Implementierungen von Medienzugriffssteuergeräten 10 innerhalb einer Netzwerkschnittstelle dar, beispielsweise der Netzwerkschnittstelle 30 der Fig. 2. Die Medienzugriffssteuergeräte 10 der Fig. 3 und 4 können jeweils in Netzwerkknoten 50 einer Netzwerkumgebung eines taktischen Luftverteidigungssystems implementiert werden, zum Beispiel in der Netzwerkumgebung 100 in einem taktischen Luftverteidigungssystem 200, wie in Fig. 1 beispielhaft dargestellt. Dabei können für unterschiedliche Netzwerkknoten 50 auch unterschiedliche Implementierungen der Medienzugriffssteuergeräte 10 gewählt werden, insbesondere im Hinblick auf die Art, Anzahl und Arbitrierung von Datenframewarteschlangen, die in den Medienzugriffssteuergeräten 10 ausgebildet werden können, sowie im Hinblick auf die jeweils zugeordneten Zugriffswettbewerbsparameter.

Beispielsweise können unterschiedliche Medienzugriffssteuergeräte 10 nach verschiedenen Kritierien bzw. Anforderungsprofilen des jeweiligen Netzwerkknotens 50, in dem sie eingesetzt werden sollten, gestaltet werden. Beispielhafte Kritierien können dabei sein: Zuordnung der zu sendenden Botschaftstypen zu differenzierten Servicecodepoints; Zuordnung der differenzierten Servicecodepoints zu Prioritätsstufen der Botschaften; Layout der Warteschlangen; Zuordnung der Prioritätsstufen zu den zu verwendenden Warteschlangentypen; Definition der Wettbewerbsparameter für den Kanalzugriff; Zuordnung der zu verwendenden Warteschlangentypen zu den Wettbewerbsparameter für den Kanalzugriff. Jedes Medienzugriffsteuergerät 10 kann diesbezüglich individuell konfiguriert werden, je nachdem ob sich das Medienzugriffsteuergerät beispielsweise im Gefechtsstand, in einem Radar oder in einem Startgerät des jeweiligen taktischen LV-Systems befindet.

Das Mediensteuergerät 10 der Fig. 3 und 4 umfasst in Sendereihenfolge betrachtet zunächst einen Klassifizierer 1, der Datenframes DF mit in den Headern der Datenframes DF enthaltenen Frameprioritätsinformationen von der Paketbearbeitungseinrichtung 20 einer Netzwerkschnittstelle 30 entgegennimmt. Die Datenframes DF können beispielsweise MAC-Frames sein, welche das Mediensteuergerät 10 auf der Sicherungsschicht, also auf der Layer 2 des OSI-Modells, verarbeitet. Die Frameprioritätsinformationen können beispielsweise in IEEE 802.1Q-normierten VLAN-Oktetts des MAC-Headers der Datenframes DF kodiert sein, und auf differenzierten Servicecodepoints (DSCPs) der in den MAC-Frames als Nutzlast enthaltenen IP-Datenpaketen IP basieren. Diese Umsetzung der DSCPs in Prioritätsstufen, die in den VLAN-Oktetts kodiert werden, kann beispielsweise durch die Paketbearbeitungseinrichtung 20 vorgenommen werden.

In taktischen Kommunikationssystemen eines LV-Systems sollten zeitkritische taktische Daten priorisiert gegenüber anderen Anwendungensdaten übertragen werden. So werden beispielsweise Zieltracks bzw. Targettracks in unterschiedliche Prioritätsstufen eingeteilt: Berichte über kritische Zieltracks mit höchster Priorität, denen eine fest zugeordnete Bandbreite der verwendeten Wellenform zugeteilt ist und die mit höchster Genauigkeit und dadurch hohem Datenvolumen übertragen werden; Berichte über bevorzugte Zieltracks mit mittlerer Priorität, deren Bandbreite je nach Anforderung zugeordnet wird und die mit mittlerer Genauigkeit und dadurch mittlerem Datenvolumen übertragen werden; und Berichte über gewöhnliche Zieltracks mit niedriger Priorität, deren Bandbreite je nach freier Verfügbarkeit zugeordnet wird und die nur mit grober Genauigkeit und dadurch geringem Datenvolumen übertragen werden.

Der Gefechtsstand des LV-Systems kann aufgrund seiner Einschätzung der Bedrohung (Zieltyp, Zielverhalten, Schutzobjekt) den Botschaftstyp eines Zieltracks setzen und verändern. Dadurch kann sichergestellt werden, dass kritische Zieltracks immer zum Empfänger gelangen und gewöhnliche Zieltracks den Kanal nicht verstopfen. Die Paketbearbeitungseinrichtung 20 verwendet die Klassifikation der gesetzten Botschaftstypen dann als Kodierungsrichtlinie für die in den VLAN-Oktetts kodierten Prioritätsstufen.

Nach dem Klassifizierer 1, das heißt sendestromabwärts sind mindestens zwei Framewarteschlangen 2 in dem Mediensteuergerät 10 vorgesehen, welche dazu ausgelegt sind, Datenframes DF zwischenzuspeichern, die durch den Klassifizierer 1 in Abhängigkeit von den Frameprioritätsinformationen in eine der mindestens zwei Framewarteschlangen 2 einsortiert werden. Nach den mindestens zwei Framewarteschlangen 2 ist eine Zeitablaufsteuereinrichtung 3 ("scheduler") nachgeschaltet, welche zwischengespeicherte Datenframes DF gemäß einer vorbestimmten Arbitrationslogik aus einer durch die Arbitrationslogik vorgegebenen Sequenz von Framewarteschlangen 2 entnimmt. Die entnommenen Datenframes DF werden dann entsprechend ihrer Reihenfolge der Entnahme sequentieller Ausgabeframestrom an eine Kollisionserkennnungseinrichtung 4 ausgegeben. Die Arbitrationslogik kann beispielsweise durch eine Netzwerkkonfigurationseinrichtung 5 vorgegeben werden, welche auch den Betrieb der Kollisionserkennnungseinrichtung 4 konfigurieren kann. In einigen Varianten können für die Zeitablaufsteuereinrichtung 3 und die Kollisionserkennnungseinrichtung 4 auch unterschiedliche Konfigurationseinrichtungen vorgesehen werden, oder die jeweilige Konfiguration kann fest in die Schaltungen der Zeitablaufsteuereinrichtung 3 und/oder der Kollisionserkennnungseinrichtung 4 einprogrammiert werden.

Die Zeitablaufsteuereinrichtung 3 kennt die Priorisierung der jeweiligen Framewarteschlangen 2, so dass beispielsweise eine Framewarteschlange 2 in der höchsten Priorisierungsstufe immer sofort dann in die Entnahmesequenz von Datenframes DF eingebunden wird, sobald ein Datenframe DF am Warteschlangenausgang ansteht. Framewarteschlangen 2 in der niedrigsten Priorisierungsstufe können beispielsweise nur dann in die Entnahmesequenz von Datenframes DF eingebunden werden, wenn ein Kanalzugriff möglich ist und gleichzeitig keine andere der Framewarteschlangen 2 einen Datenframe DF an ihrem Ausgang anstehen hat.

Die mindestens zwei Framewarteschlangen 2 können je nach Anwendung auf verschiedenen Warteschlangenprinzipien beruhen, beispielsweise auf dem Windhundprinzip ("First-in First-out", FIFO), dem Prinzip der Vorrangwarteschlange (Priority Queuing, PQ), dem Fair Queuing (FQ), dem gewichteten Fair Queuing ("weighted fair queuing", WFQ), der Rundlaufarbitrierung ("Round-Robin"), dem Prinzip des Earliest Deadline First (EDF) oder dem Rate Monotonic Scheduling (RMS). Jedes dieser Warteschlangenprinzipien erstellt einen Zeitablaufplan ("schedule"), gemäß dessen die Entnahmereihenfolge von in der Warteschlange zwischengespeicherten bzw. gepufferten Datenframes eingeplant wird. Dadurch wird die nur beschränkt verfügbare Ressource der Kanalzugriffszeit den jeweiligen Datenframes je nach Warteschlange zugeteilt. Die verschiedenen Warteschlangenprinzipien beruhen auf der Abwägung unterschiedlicher Ressourcennutzungskriterien wie etwa Datendurchsatz, Bearbeitungseffizienz, Ressourcenzuteilungsfairness oder Terminierungseinhaltung.

Die Kollisionserkennnungseinrichtung 4 speist den von der Zeitablaufsteuereinrichtung 3 gemäß der Arbitrationslogik erstellten sequentiellen Ausgabeframestrom in einen physikalischen Datenübertragungskanal D ein, beispielsweise über die die physikalische Datenübertragungseinrichtung 60 der Netzwerkschnittstelle 30. Diese die physikalische Datenübertragungseinrichtung 60 kann der Kollisionserkennnungseinrichtung 4 auch Rückmeldung über Erfolg oder Misserfolg beim Senden einzelner Datenframes DF geben, wodurch die Kollisionserkennnungseinrichtung 4 in die Lage versetzt wird, entsprechende Maßnahmen zur Steuerung des Zugriffswettbewerbs auf den Übertragungskanal zu initiieren. Dazu kann die Kollisionserkennnungseinrichtung4 beispielsweise die einzelnen Datenframes DF des sequentiellen Ausgabeframestroms gemäß vorbestimmter Zugriffswettbewerbsparameter in den physikalischen Datenübertragungskanal einspeisen. Diese Zugriffswettbewerbsparameter können auf der Basis von Zugriffswettbewerbsindikatoren erstellt werden, die von der Zeitablaufsteuereinrichtung 3 für den jeweils zuletzt aus einer der Framewarteschlangen 2 entnommenen Datenframe DF an die Kollisionserkennnungseinrichtung 4 ausgegeben werden.

Für verschiedene Framewarteschlangen können damit unterschiedliche Zugriffswettbewerbsindikatoren angegeben werden, beispielsweise der zu verwendende Arbitrated Interframe Space (AIFS), das heißt die minimale Wartezeit nach einem Kanalzugriff auf das Übertragungsmedium, nach der ein erneuter Zugriff stattfinden soll/darf. Weitere Zugriffswettbewerbsindikatoren können eine Transmission Opportunity (TXOP), das heißt Anfang und Dauer eines ein Senderecht sichernden Sendeintervalls, Länge eines Wettbewerbsfensters ("contention window", CW) oder eine Anzahl maximal zulässiger Kanalzugriffsiterationen nach Scheitern eines Kanalzugriffs sein.

Je nach Zugriffswettbewerbsparametern und Rückmeldungen der physikalischen Datenübertragungseinrichtung 60 kann die Kollisionserkennnungseinrichtung 4 Quittierungssignale über die kollisionsfreie (oder kollisionsbehaftete) Übertragung eines Datenframes DF an die Zeitablaufsteuereinrichtung 3 ausgeben. Die Zeitablaufsteuereinrichtung 3 kann beispielsweise erst dann einen neuen Datenframe DF aus einer der Framewarteschlangen 2 entnehmen, wenn ein entsprechendes Quittierungssignal für den vorangegangenen Datenframe DF erhalten worden ist.

In Fig. 4 ist ein Beispiel für Framewarteschlangen 2a, 2b, 2c mit verschiedenen Warteschlangenprinzipien dargestellt. Die Framewarteschlange 2a kann beispielsweise eine reine FIFO-Warteschlange sein, in der die Datenframes DF in der zeitlichen Reihenfolge ihrer Einsortierung von alt nach jung abgearbeitet werden. Die Framewarteschlange 2c kann beispielsweise eine Earliest Deadline First (EDF) sein, bei der eine Terminierungseinrichtung 6 die Adressindikatoren für den Ablauf der Datenframes DF ausliest und in die Arbitrationslogik als Logikparameter einfließen lässt. Die Terminierungseinrichtung 6 kann beispielsweise auch dazu ausgelegt sein, Datenframes in der Framewarteschlange 2c, die bereits abgelaufen sind, aus der Framewarteschlange 2c zu entfernen.

Die Framewarteschlangen 2b sind WFQ-Warteschlangen, bei denen jede der Framewarteschlangen 2b ein Priorisierungsgewicht aufweist, und bei der ein gemeinsamer Zugriff der Zeitablaufsteuereinrichtung 3 ein festgelegte Abrufreihenfolge einhält, sobald die Gruppe der Framewarteschlangen 2b in der hierarchisch übergeordneten Entnahmesequenz ansteht.

Es sollte klar sein, dass die in den Fig. 3 und 4 dargestellten Anordnungen von Framewarteschlangen 2a, 2b, 2c nur beispielhafter Natur sind, und dass andere Gruppierungen von Framewarteschlangen 2 hinsichtlich Anzahl, Art und Arbitrierungsparametern ebenso gewählt werden können.

Das Medienzugriffssteuergerät 10 ist auf der Sicherungsschicht (Layer 2, L2) angesiedelt und verarbeitet Datenframes DF wie etwa MAC-Frames, die von der Vermittlungsschicht (Layer 3, L3) her eingespeist werden. Nach der Verarbeitung der Datenframes DF durch das Medienzugriffssteuergerät 10 werden sie an die physikalische Übertragungsschicht (Layer 1, L1) abgegeben, in der der tatsächliche Kanalzugriff erfolgt.

Fig. 5 zeigt ein Flussdiagramm eines Verfahrens M zur Medienzugriffssteuerung, beispielsweise einer prioritätsbasierten Medienzugriffssteuerung ("media access control", MAC) in einer Netzwerkumgebung eines taktischen Luftverteidigungssystems. Dabei kann das Verfahren M beispielsweise in einem Netzwerkknoten 50 einer Netzwerkumgebung 100 wie in Fig. 1 beispielhaft dargestellt und erläutert implementiert werden. Das Verfahren M zur Medienzugriffssteuerung kann dabei auf eine Infrastruktur einer Netzwerkschnittstelle 30 zurückgreifen, wie sie im Zusammenhang mit den Fig. 2 bis 4 beispielhaft dargestellt und erläutert worden ist.

Das Verfahren M umfasst in einer ersten Stufe M1 zunächst ein Klassifizieren von Datenframes DF in Abhängigkeit von in Headern der Datenframes DF enthaltenen Frameprioritätsinformationen. Diese Datenframes DF können insbesondere MAC-Frames sein, die auf der Sicherungsschicht (Layer 2) verarbeitet werden.

Die Datenframes DF können beispielsweise als Nutzlast IP-Datenpakete aufweisen, in denen differenzierte Servicecodepoints (DSCPs) enthalten sind, die Prioritätsinformationen über die Priorisierung der jeweiligen IP-Datenpakete umfassen. Die Klassifizierung kann dabei beispielsweise auf Frameprioritätsinformationen zurückgreifen, die in IEEE 802.1Q-normierten VLAN-Oktetts eines MAC-Headers der Datenframes DF kodiert sind. Solche VLAN-Oktetts können eine Prioritätsstufe der jeweiligen Datenframes DF angeben, die auf der Basis der DSCPs der transportierten IP-Datenpakete erstellt werden.

In einer folgenden Stufe M2 des Verfahrens werden die Datenframes DF in Abhängigkeit von der Klassifizierung in eine von mindestens zwei Framewarteschlangen 2 einsortiert. In der jeweils ausgewählten Framewarteschlange werden diese einsortierten Datenframes DF dann zwischengespeichert. Die mindestens zwei Framewarteschlangen 2 können je nach Anwendung auf verschiedenen Warteschlangenprinzipien beruhen, beispielsweise auf dem Windhundprinzip ("First-in First-out", FIFO), dem Prinzip der Vorrangwarteschlange (Priority Queuing, PQ), dem Fair Queuing (FQ), dem gewichteten Fair Queuing ("weighted fair queuing", WFQ), der Rundlaufarbitrierung ("Round-Robin"), dem Prinzip des Earliest Deadline First (EDF) oder dem Rate Monotonic Scheduling (RMS). Jedes dieser Warteschlangenprinzipien erstellt einen Zeitablaufplan ("schedule"), gemäß dessen die Entnahmereihenfolge von in der Warteschlange zwischengespeicherten bzw. gepufferten Datenframes eingeplant wird. Dadurch wird die nur beschränkt verfügbare Ressource der Kanalzugriffszeit den jeweiligen Datenframes je nach Warteschlange zugeteilt. Die verschiedenen Warteschlangenprinzipien beruhen auf der Abwägung unterschiedlicher Ressourcennutzungskriterien wie etwa Datendurchsatz, Bearbeitungseffizienz, Ressourcenzuteilungsfairness oder Terminierungseinhaltung.

Das Verfahren M umfasst in einer dritten Stufe M3 das sequentielle Entnehmen von Datenframes DF aus den in den Framewarteschlangen 2 zwischengespeicherten Datenframes gemäß einer vorbestimmten Arbitrationslogik. Diese Arbitrationslogik kann durch eine deterministische Schedulerfunktion implementiert werden und greift gemäß der Priorisierungsreihenfolge auf die verschiedenen Warteschlangen zu. Mit anderen Worten werden die Datenframes DF durch die Klassifikation in Stufe M1 und die Zuteilung zu verschiedenen Warteschlangen in Stufe M2 des Verfahrens M derart vorsortiert und mit Prioritätsindikatoren gekennzeichnet, dass die Arbitrationslogikje nach Betriebszustand des Medienzugriffssteuerung, nach verfügbarer Kanalzugriffszeit und gegebenenfalls nach erforderlicher Dringlichkeit bei der Ausgabe von Datenframes in den Datenübertragungskanal die Datenübertragungseffizienz maximieren und die Laufzeit der Datenübertragung bei als wichtig eingestuften Daten minimieren kann. Dies berücksichtigt die Arbitrationslogik durch die Sequenz bei der Wahl der jeweiligen Framewarteschlangen, auf die bei der Bildung von Ausgabedatenframeströmen zurückgegriffen wird.

Schließlich erfolgt in Stufe M4 des Verfahrens M ein Ausgeben der entnommenen Datenframes DF als sequentiellen Ausgabedatenframestrom, der dann in einem optionalen Schritt M5 in einen physikalischen Datenübertragungskanal gemäß vorbestimmter Zugriffswettbewerbsparameter eingespeist werden kann. Beispielsweise kann für den jeweils zuletzt aus einer der Framewarteschlangen entnommenen Datenframe DF ein Zugriffswettbewerbsindikator ausgegeben werden. Dieser Zugriffswettbewerbsindikator stellt dann die Basis dar, auf der das Einspeisen des sequentiellen Ausgabeframestroms in Stufe M5 in den physikalischen Datenübertragungskanal erfolgt. Für verschiedene Framewarteschlangen können damit unterschiedliche Zugriffswettbewerbsindikatoren angegeben werden, beispielsweise der zu verwendende Arbitrated Interframe Space (AIFS), das heißt die minimale Wartezeit nach einem Kanalzugriff auf das Übertragungsmedium, nach der ein erneuter Zugriff stattfinden soll/darf. Weitere Zugriffswettbewerbsindikatoren können eine Transmission Opportunity (TXOP), das heißt Anfang und Dauer eines ein Senderecht sichernden Sendeintervalls, Länge eines Wettbewerbsfensters ("contention windopw", CW) oder eine Anzahl maximal zulässiger Kanalzugriffsiterationen nach Scheitern eines Kanalzugriffs sein.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Viele andere Beispiele werden dem Fachmann aufgrund seiner fachlichen Kenntnisse in Anbetracht der obigen Beschreibung sofort und unmittelbar klar sein. Der Schutzbereich der vorliegenden Erfindung wird durch die nachfolgend aufgeführten Ansprüche definiert.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Taktisches Luftverteidigungssystem (200) mit mindestens einer Radarstation (R1, R2), einem mobilen, quasi-stationären oder stationären Gefechtsstand (G) und mindestens einem Startgerät (S1, D2), wobei die mindestens eine Radarstation (R1, R2), der Gefechtsstand (G) und das mindestens eine Startgerät (S1, D2) jeweils eine Netzwerkschnittstelle (30) mit einem Medienzugriffssteuergerät (10) aufweisen und die mindestens eine Radarstation (R1, R2) und das mindestens eine Startgerät (S1, D2) zur Übernahme der Gefechtsstandsfunktion des Gefechtsstands (G) dynamisch rekonfigurierbar sind, und wobei das Medienzugriffssteuergerät (10) jeweils umfasst:
mindestens zwei Framewarteschlangen (2), welche dazu ausgelegt sind, MAC-Frames (DF) zwischenzuspeichern;
einen den mindestens zwei Framewarteschlangen (2) vorgeschalteten Klassifizierer (1), welcher dazu ausgelegt ist, MAC-Frames (DF) in Abhängigkeit von in IEEE 802.1Q-normierten VLAN-Oktetts der MAC-Header der MAC-Frames (DF) enthaltenen Frameprioritätsinformationen in eine der mindestens zwei Framewarteschlangen (2) einzusortieren; und
eine den mindestens zwei Framewarteschlangen (2) nachgeschaltete deterministische Zeitablaufsteuereinrichtung (3), welche dazu ausgelegt ist, MAC-Frames (DF) aus den in den mindestens zwei Framewarteschlangen (2) zwischengespeicherten MAC-Frames (DF) gemäß einer vorbestimmten Arbitrationslogik sequentiell zu entnehmen und als sequentiellen Ausgabeframestrom auszugeben.

2. Taktisches Luftverteidigungssystem (200) gemäß Anspruch 1, wobei die Medienzugriffssteuergerät (10) weiterhin aufweisen:
eine Kollisionserkennnungseinrichtung (4), welche der Zeitablaufsteuereinrichtung (3) nachgeschaltet ist und welche dazu ausgelegt ist, den sequentiellen Ausgabeframestrom in einen physikalischen Datenübertragungskanal einzuspeisen.

3. Taktisches Luftverteidigungssystem (200) gemäß Anspruch 2, wobei die Kollisionserkennnungseinrichtung (4) dazu ausgelegt ist, die einzelnen MAC-Frames (DF) des sequentiellen Ausgabeframestroms gemäß vorbestimmter Zugriffswettbewerbsparameter in den physikalischen Datenübertragungskanal einzuspeisen.

4. Taktisches Luftverteidigungssystem (200) gemäß einem der Ansprüche 2 und 3, wobei die Kollisionserkennnungseinrichtung (4) dazu ausgelegt ist, der Zeitablaufsteuereinrichtung (3) ein Quittierungssignal über die kollisionsfreie Übertragung eines MAC-Frames (DF) bereitzustellen und wobei die Zeitablaufsteuereinrichtung (3) dazu ausgelegt ist, nach Erhalt des Quittierungssignals einen neuen MAC-Frame (DF) aus einer der mindestens zwei Framewarteschlangen (2) zu entnehmen.

5. Taktisches Luftverteidigungssystem (200) gemäß Anspruch 4, wobei die Zeitablaufsteuereinrichtung (3) dazu ausgelegt ist, einen für den jeweils zuletzt aus einer der mindestens zwei Framewarteschlangen (2) entnommenen MAC-Frame (DF) gültigen Zugriffswettbewerbsindikator an die Kollisionserkennnungseinrichtung (4) auszugeben, und wobei die Kollisionserkennnungseinrichtung (4) dazu ausgelegt ist, einen Zugriffswettbewerbsparameter für die Einspeisung des jeweiligen MAC-Frames (DF) in den physikalischen Datenübertragungskanal auf der Basis des Zugriffswettbewerbsindikators zu bestimmen.

6. Taktisches Luftverteidigungssystem (200) gemäß einem der Ansprüche 1 bis 5, wobei die mindestens zwei Framewarteschlangen (2) gemäß mindestens einem Warteschlangenfunktionsprinzip der Gruppe der Warteschlangenfunktionsprinzipien bestehend aus Windhundprinzip (FIFO), Vorrangwarteschlange (Priority Queuing), Fair Queuing, gewichtetes Fair Queuing, Rundlaufarbitrierung (Round-Robin), Earliest Deadline First (EDF) und Rate Monotonic Scheduling (RMS) operieren.

7. Taktisches Luftverteidigungssystem (200) gemäß einem der Ansprüche 1 bis 6, wobei die Medienzugriffssteuergeräte (10) MAC-Frames (DF) auf der Sicherungsschicht verarbeiten.

8. Verfahren (M) zur Medienzugriffssteuerung in einem taktischen Luftverteidigungssystem (200), welches mindestens eine Radarstation (R1, R2), einen mobilen, quasi-stationären oder stationären Gefechtsstand (G) und mindestens ein Startgerät (S1, D2) mit jeweils einer Netzwerkschnittstelle (30) mit einem Medienzugriffssteuergerät (10) aufweisen und die mindestens eine Radarstation (R1, R2) und das mindestens eine Startgerät (S1, D2) zur Übernahme der Gefechtsstandsfunktion des Gefechtsstands (G) dynamisch rekonfigurierbar sind, mit den folgenden, durch das Medienzugriffsteuergerät (10) ausgeführten, Schritten:
Klassifizieren (M1) von MAC-Frames (DF) in Abhängigkeit von in IEEE 802.1Q-normierten VLAN-Oktetts der MAC-Header der MAC-Frames (DF) enthaltenen Frameprioritätsinformationen;
Einsortieren (M2) der MAC-Frames (DF) in Abhängigkeit von der Klassifikation in eine von mindestens zwei Framewarteschlangen (2) und
Zwischenspeichern der einsortierten MAC-Frames (DF) in den mindestens zwei Framewarteschlangen (2);
wobei das Medienzugriffssteuergerät eine deterministische Zeitablaufsteuerung umfasst, die ausgebildet ist, die folgenden Schritte auszuführen:
Sequentielles Entnehmen (M3) von MAC-Frames (DF) aus den in den mindestens zwei Framewarteschlangen (2) zwischengespeicherten MAC-Frames (DF) gemäß einer vorbestimmten Arbitrationslogik; und
Ausgeben (M4) der entnommenen MAC-Frames (DF) als sequentiellen Ausgabeframestrom.

9. Verfahren gemäß Anspruch 8, weiterhin mit dem Schritt:
Einspeisen (M5) des sequentiellen Ausgabeframestroms in einen physikalischen Datenübertragungskanal gemäß vorbestimmter Zugriffswettbewerbsparameter.

10. Verfahren gemäß Anspruch 9, wobei für den jeweils zuletzt aus einer der mindestens zwei Framewarteschlangen (2) entnommenen MAC-Frame (DF) ein Zugriffswettbewerbsindikator ausgegeben wird, auf der Basis dessen das Einspeisen (M5) des sequentiellen Ausgabeframestroms in den physikalischen Datenübertragungskanal erfolgt.

11. Verfahren gemäß einem der Ansprüche 8 bis 10, wobei die mindestens zwei Framewarteschlangen (2) gemäß mindestens einem Warteschlangenfunktionsprinzip der Gruppe der Warteschlangenfunktionsprinzipien bestehend aus Windhundprinzip (FIFO), Vorrangwarteschlange (Priority Queuing), Fair Queuing, gewichtetes Fair Queuing, Rundlaufarbitrierung (Round-Robin), Earliest Deadline First (EDF) und Rate Monotonic Scheduling (RMS) operieren.

12. Verfahren gemäß einem der Ansprüche 8 bis 11, wobei die MAC-Frames (DF) auf der Sicherungsschicht verarbeitet werden.

## Claims

1. Tactical air defence system (200) comprising at least one radar station (R1, R2), a mobile, quasi-stationary or stationary command post (G) and at least one start-up device (S1, D2), wherein the at least one radar station (R1, R2), the command post (G) and the at least one start-up device (S1, D2) each have a network interface (30) comprising a media access control device (10), and the at least one radar station (R1, R2) and the at least one start-up device (S1, D2) are dynamically reconfigurable to take over the command post functionality of the command post (G), and wherein the media access control device (10) in each case comprises:
at least two frame queues (2), which are configured to buffer MAC frames (DF);
a classifier (1), which is upstream from the at least two frame queues (2) and which is configured to sort MAC frames (DF) into one of the at least two frame queues (2) as a function of frame priority information contained in IEEE 802.1Q-standardised VLAN octets of the MAC headers of the MAC frames (DF); and
a deterministic time sequence control device (3), which is downstream from the at least two frame queues (2) and which is configured to draw MAC frames (DF) sequentially, in accordance with a predetermined arbitration logic, from the MAC frames (DF) buffered in the at least two frame queues (2) and to output them as a sequential output frame stream.

2. Tactical air defence system (200) according to claim 1, wherein the media access control devices (10) further comprise:
a collision detection device (4), which is downstream from the time sequence control device (3) and which is configured to feed the sequential output frame stream into a physical data transmission channel.

3. Tactical air defence system (200) according to claim 2, wherein the collision detection device (4) is configured to feed the individual MAC frames (DF) of the sequential output frame stream into the physical data transmission channel in accordance with predetermined access competition parameters.

4. Tactical air defence system (200) according to either claim 2 or claim 3, wherein the collision detection device (4) is configured to provide the time sequence control device (3) with a confirmation signal regarding the collision-free transmission of a MAC frame (DF), and wherein the time sequence control device (3) is configured to receive a new MAC frame (DF) from one of the at least two frame queues (2) after the confirmation signal has been received.

5. Tactical air defence system (200) according to claim 4, wherein the time sequence control device (3) is configured to output an access competition indicator, which in each case is valid for the MAC frame (DF) most recently drawn from one of the at least two frame queues (2), to the collision detection device (4), and wherein the collision detection device (4) is configured to determine an access competition parameter for feeding the associated MAC frame (DF) into the physical data transmission channel on the basis of the access competition indicator.

6. Tactical air defence system (200) according to any of claims 1 to 5, wherein the at least two frame queues (2) operate in accordance with at least one queue operating principle from the group of queue operating principles consisting of first-in first-out (FIFO), priority queuing, fair queuing, weighted fair queuing, round robin, earliest deadline first (EDF), and rate-monotonic scheduling (RMS).

7. Tactical air defence system (200) according to any of claims 1 to 6, wherein the media access control devices (10) process MAC frames (DF) on the security layer.

8. Method (M) for media access control in a tactical air defence system (200) which comprises at least one radar station (R1, R2), a mobile, quasi-stationary or stationary command post (G) and at least one start-up device (S1, D2), each having a network interface (30) comprising a media access control device (10), and in which the at least one radar station (R1, R2) and the at least one start-up device (S1, D2) are dynamically reconfigurable to take over the command post functionality of the command post (G), comprising the following steps which are carried out by the media access control device (10):
classifying (M1) MAC frames (DF) as a function of frame priority information contained in IEE 802.1Q-standardised VLAN octets of the MAC header of the MAC frames (DF);
sorting (M2) the MAC frames (DF) into one of at least two frame queues (2) as a function of the classification and buffering the sorted MAC frames (DF) into the at least two frame queues (2);
wherein the media access control device comprises a deterministic time sequence control system, which is formed to carry out the following steps:
sequentially drawing (M3) MAC frames (DF), in accordance with a predetermined arbitration logic, from the MAC frames (DF) buffered in the at least two frame queues (2); and
outputting (M4) the drawn MAC frames (DF) as a sequential output frame stream.

9. Method according to claim 8, further comprising the step of:
feeding (M5) the sequential output frame stream into a physical data transmission channel in accordance with predetermined access competition parameters.

10. Method according to claim 9, wherein, for the MAC frame (DF) most recently drawn from one of the at least two frame waiting queues (2) in each case, an access competition indicator is outputted, on the basis of which the sequential output frame stream is fed (M5) into the physical data transmission channel.

11. Method according to any of claims 8 to 10, wherein the at least two frame queues (2) operate in accordance with at least one queue operating principle from the group of queue operating principles consisting of first-in first-out (FIFO), priority queuing, fair queuing, weighted fair queuing, round robin, earliest deadline first (EDF), and rate-monotonic scheduling (RMS).

12. Method according to any of claims 8 to 11, wherein the MAC frames (DF) are processed on the security layer.

## Revendications

1. Système antiaérien tactique (200) doté d'au moins une station radar (R1, R2), d'un poste de combat (G) mobile, quasi-stationnaire ou stationnaire et d'au moins un lanceur (S1, D2), dans lequel l'au moins une station radar (R1, R2), le poste de combat (G) et l'au moins un lanceur (S1, D2) comportent respectivement une interface réseau (30) dotée d'un outil de commande d'accès multimédia (10) et l'au moins une station radar (R1, R2) et l'au moins un lanceur (S1, D2) peuvent être reconfigurés de manière dynamique pour la reprise de la fonction de poste de combat du poste de combat (G), et dans lequel l'outil de commande d'accès multimédia (10) comprend respectivement :
au moins deux files d'attente de trame (2), lesquelles sont configurées pour mettre en mémoire tampon des trames MAC (DF) ;
un classificateur (1) agencé en amont des au moins deux files d'attente de trame (2), lequel est configuré pour trier les trames MAC (DF) dans une des au moins deux files d'attente de trame (2) en fonction d'informations de priorité de trame contenues dans les octets VLAN norme IEEE 802.1Q de l'en-tête MAC de la trame MAC (DF) ; et
un dispositif déterministe de commande de délai (3) agencé en aval des au moins deux files d'attente de trame (2), lequel est configuré pour extraire séquentiellement des trames MAC (DF) parmi les trames MAC (DF) mises en mémoire tampon dans les au moins deux files d'attente de trame (2) selon une logique d'arbitrage prédéfinie et les émettre en tant que flux de trames de sortie séquentiel.

2. Système antiaérien tactique (200) selon la revendication 1, dans lequel les outils de commande d'accès multimédia (10) comprennent en outre :
un dispositif de reconnaissance de collision (4), lequel est agencé en aval du dispositif de commande de délai (3) et est configuré pour injecter le flux de trames de sortie séquentiel dans un canal physique de transmission de données.

3. Système antiaérien tactique (200) selon la revendication 2, dans lequel le dispositif de reconnaissance de collision (4) est configuré pour injecter les trames MAC individuelles (DF) du flux de trames de sortie séquentiel dans le canal physique de transmission de données conformément à un paramètre de concurrence d'accès prédéfini.

4. Système antiaérien tactique (200) selon l'une des revendications 2 et 3, dans lequel le dispositif de reconnaissance de collision (4) est configuré pour fournir au dispositif de commande de délai (3) un signal d'accusé de réception concernant la transmission sans collision d'une trame MAC (DF) et dans lequel le dispositif de commande de délai (3) est configuré pour extraire une nouvelle trame MAC (DF) d'une des au moins deux files d'attente de trame (2) après réception du signal d'accusé de réception.

5. Système antiaérien tactique (200) selon la revendication 4, dans lequel le dispositif de commande de délai (3) est configuré pour envoyer au dispositif de reconnaissance de collision (4) un indicateur de concurrence d'accès respectivement valable pour la dernière trame MAC (DF) extraite d'une des au moins deux files d'attente de trame (2), et dans lequel le dispositif de reconnaissance de collision (4) est configuré pour déterminer, sur la base de l'indicateur de concurrence d'accès, un paramètre de concurrence d'accès pour l'injection de la trame MAC (DF) respective dans le canal physique de transmission de données.

6. Système antiaérien tactique (200) selon l'une des revendications 1 à 5, dans lequel les au moins deux files d'attente de trame (2) opèrent selon au moins un principe de file d'attente issu du groupe des principes de file d'attente constitué par le principe « premier arrivé, premier servi » (FIFO), la file de priorité (Priority Queuing), la file d'attente équitable (Fair Queuing), la file d'attente équitable pondérée, l'ordonnancement round-robin, l'ordonnancement « priorité à la première échéance » (EDF) et l'ordonnancement à taux monotone (RMS).

7. Système antiaérien tactique (200) selon l'une des revendications 1 à 6, dans lequel les outils de commande d'accès multimédia (10) traitent les trames MAC (DF) sur la couche liaison de données.

8. Procédé (M) de commande d'accès multimédia dans un système antiaérien tactique (200), lequel comporte au moins une station radar (R1, R2), un poste de combat (G) mobile, quasi-stationnaire ou stationnaire et au moins un lanceur (S1, D2), dotés respectivement d'une interface réseau (30) dotée d'un outil de commande d'accès multimédia (10) et dans lequel l'au moins une station radar (R1, R2) et l'au moins un lanceur (S1, D2) peuvent être reconfigurés de manière dynamique pour la reprise de la fonction de poste de combat du poste de combat (G), avec les étapes suivantes, mises en œuvre par l'outil de commande d'accès multimédia (10) :
catégorisation (M1) de trames MAC (DF) en fonction d'informations de priorité de trame contenues dans les octets VLAN norme IEEE 802.1Q de l'en-tête MAC de la trame MAC (DF) ;
tri (M2) des trames MAC (DF) dans une des au moins deux files d'attente de trame (2) en fonction de la catégorisation et
mise en mémoire tampon des trames MAC (DF) triées dans les au moins deux files d'attente de trame (2) ;
dans lequel l'outil de commande d'accès multimédia comprend une commande déterministe de délai, laquelle est réalisée pour mettre en œuvre les étapes suivantes :
extraction séquentielle (M3) de trames MAC (DF) issues des trames MAC (DF) mises en mémoire tampon dans les au moins deux files d'attente de trame (2) selon une logique d'arbitrage prédéfinie ; et
émission (M4) des trames MAC (DF) extraites comme flux de trames de sortie séquentiel.

9. Procédé selon la revendication 8, avec en outre l'étape :
injection (M5) du flux de trames de sortie séquentiel dans un canal physique de transmission de données conformément à un paramètre de concurrence d'accès prédéfini.

10. Procédé selon la revendication 9, dans lequel un indicateur de concurrence d'accès est émis pour la dernière trame MAC (DF) respectivement extraite d'une des au moins deux files d'attente de trame (2), sur la base duquel s'effectue l'injection (M5) du flux de trames de sortie séquentiel dans le canal physique de transmission de données.

11. Procédé selon l'une des revendications 8 à 10, dans lequel les au moins deux files d'attente de trame (2) opèrent selon au moins un principe de file d'attente issu du groupe des principes de file d'attente constitué par le principe « premier arrivé, premier servi » (FIFO), la file de priorité (Priority Queuing), la file d'attente équitable (Fair Queuing), la file d'attente équitable pondérée, l'ordonnancement round-robin, l'ordonnancement « priorité à la première échéance » (EDF) et l'ordonnancement à taux monotone (RMS).

12. Procédé selon l'une des revendications 8 à 11, dans lequel les trames MAC (DF) sont traitées sur la couche de liaison de données.
